# Europäisches Patentamt

(19) **European Patent Office**

**Office européen des brevets**

(11) Veröffentlichungsnummer: **0 019 757**

**B1**

(12) ## EUROPÄISCHE PATENTSCHRIFT

(45) Veröffentlichungstag der Patentschrift:
19.09.84

(51) Int. Cl.³: **G 06 F 3/04**, G 06 F 15/16

(21) Anmeldenummer: 80102473.8

(22) Anmeldetag: 06.05.80

(54) **Datenverarbeitungsanlage, bei der mehrere Vorrechner und ein den Vorrechnern übergeordneter Hauptrechner in einer Baumstruktur angeordnet sind.**

(30) Priorität: 23.05.79 DE 2920994

(43) Veröffentlichungstag der Anmeldung:
10.12.80 Patentblatt 80/25

(45) Bekanntmachung des Hinweises auf die Patenterteilung:
19.09.84 Patentblatt 84/38

(84) Benannte Vertragsstaaten:
FR GB IT NL

(73) Patentinhaber: Siemens Aktiengesellschaft, Berlin und München Wittelsbacherplatz 2, D-8000 München 2 (DE)

(72) Erfinder: Belfuss, Wolfgang, Dipl.-Ing.,
Breithornstrasse 2, D-8000 München 82 (DE)
Erfinder: Birzele, Paul, Dipl.-Ing., Schumacherring 25,
D-8000 München 83 (DE)
Erfinder: Geitz, Gerhard, Dipl.-Math.,
Marschnerstrasse 41g, D-8000 München 60 (DE)

(56) Entgegenhaltungen:
DE - A - 2 813 383

PROCEEDINGS OF THE NATIONAL ELECTRONICS CONFERENCE, Band 31, 1977, Oak Brook, US, G.J. SUMMERS: "Microprocessor controlled LSI in data communication links", Seiten 300-304
EDN, Band 23, Nr. 1, Januar 1978, Denver, US, A. HIRSCH: "Minis used as data interfaces merit multilevel considerations", Seiten 61-67
TELCOM REPORT, Band 1, Nr. 3, Juni 1978, München, DE, W. BÄKER: "Kommunikationsrechner des Systems TRANSDATA 960", Seiten 164-169
EVOLUTIONS IN COMPUTER COMMUNICATIONS; Proceedings of the fourth international conference on computer communication 26.-29. September 1978, Kyoto, Amsterdam, NL, H.M. SCHLESINGER et al.: "A

(56) Entgegenhaltungen: (Fortsetzung)
microprocessor-based synchronous communications subsystem for minicomputers", Seiten 77-81
COMPUTER, Band 10, Nr. 7, Juli 1977 Long Beach, US, W.L. SPETZ: "Microprocessor networks", Seiten 64-70
IBM TECHNICAL DISCLOSURE BULLETIN, Band 22, Nr. 6, November 1979, New York, US, G.E. LEIKAM et al.: "Programmable dual modem adapter for a communication interface", Seiten 2212-2213

## Beschreibung

Die Erfindung bezieht sich auf eine Datenverarbeitungsanlage, bei der mehrere Vorrechner und ein den Vorrechnern übergeordneter Hauptrechner in einer Baumstruktur angeordnet sind.

Bekannte Datenübertragungssteuerungen in komplexen Datenverarbeitungsanlagen sind in aller Regel durch ihrerseits komplexe und platzaufwendige Hardware realisiert. Die Prozedurschritte werden dabei programmgesteuert, wobei die jeweilige Datenverarbeitungseinrichtung, die mit einer externen Datenverarbeitungsanlage kommuniziert, mitverwendet wird. Nachteilig bei einer solchen Anordnung ist, daß die Datenverarbeitungseinrichtung über ihre eigentliche Aufgabe hinaus, nämlich Daten zu verarbeiten, mit den erforderlichen Prozedur-Steuerungsaufgaben belastet wird. Daraus kann sich zum einem eine Beeinträchtigung ihrer Arbeitsgeschwindigkeit und zum anderen eine nachteilige Verringerung des für ihre eigentliche Aufgabe zur Verfügung stehenden Speichervolumens ergeben. Eine verminderte Arbeitsgeschwindigkeit ist insbesondere bei Datenverarbeitungsanlagen, die im Echtzeitbetrieb arbeiten müssen, unvorteilhaft.

Aus »Evolutions in computer communications, proceedings of the fourth international conference on computer communcations, 26.—29. September 1978, Kyoto«, S. 77—81, ist eine Datensende/-empfangseinrichtung bekannt, bei der eine Parallel/Seriell- und Seriell/Parallel-Umsetzung der zu übertragenden Daten durchgeführt wird. Diese bekannte Einrichtung weist u. a. eine Modemsteuerung, einen Mikroprozessor, einen Prozedurspeicher, einen Pufferspeicher, eine Interruptsteuerung und einen Zeitgeber auf. Diese bekannte Einrichtung ist für die Durchführung von sog. STLC- und HDLC-Verfahren mit zeichen- oder bitorientierten Protokollen geeignet. Dabei können bis zu sechszehn Leitungsinterface-Schaltungen durch diese Einrichtung gesteuert werden.

Aus »EDN«, Band 23, No. 1, Januar 1978, S. 61—67 ist ein System bekannt, bei dem Datensende/-empfangseinrichtungen oder sog. Datenübertragungsschnittstellenschaltungen mittels Minicomputer gesteuert werden, wobei diesen Schaltungen Modems zugeordnet sind.

Aus »Computer«, Band 10, No. 7, Juli 1977, S. 64—70 sind Rechnersysteme bekannt, in denen in verschiedenen Netzstrukturen auch nichtgleichartige Rechner miteinander verbunden sind. Solche Netzstrukturen sind beispielsweise ringförmig oder sternförmig. In diesen bekannten Systemen können die einzelnen Rechnern eigene Datensende/-empfangseinrichtungen zugeordnet sein.

Der Erfindung liegt die Aufgabe zugrunde, eine Datenverarbeitungsanlage mit mehreren Rechnern unterschiedlicher Rangstufen zu schaffen, bei der eine gegenüber bekannten Systemen oder Anlagen größere Flexibilität oder Anpassungsfähigkeit in bezug auf die Anforderungen an die Datenverarbeitungsanlage und darüber hinaus die Möglichkeit gegeben ist, Daten über zwei voneinander getrennte, doppeltgerichtete Datenübertragungskanäle zu senden oder zu empfangen, so daß beispielsweise Anordnungen von Datenverarbeitungsanlagen in vermaschten Datenverarbeitungsnetzen ermöglicht sind.

Die genannte Aufgabe wird durch eine wie eingangs erwähnte Datenverarbeitungsanlage, bei der mehrere Vorrechner und ein den Vorrechnern übergeordneter Hauptrechner in einer Baumstruktur angeordnet sind, gelöst, die durch die im gekennzeichneten Teil des Patentanspruchs angegebenen Merkmale gekennzeichnet ist.

Die Erfindung bietet den Vorteil, daß durch den Einsatz eines aus einem Mikroprozessor und einem umschreibbaren Programmspeicher gebildeten Mikrorechners der Aufwand für Hardware entscheidend verringert ist und daß die gesamte Datenübertragungs-Prozedur mit dem Datenübertragungs-Prozessor selbständig abgewickelt werden kann, so daß die Datenverarbeitungseinrichtung entlastet ist. Vorteilhaft ist außerdem, daß in dem Datenübertragungs-Prozessor, der erfindungsgemäß zwischen der internen Datenverarbeitungseinrichtung und einem eine Datenleitung abschließenden Datenmodem angeordnet ist, aus Standardbausteinen modular aufgebaut ist, so daß keine kostspieligen Entwicklungsarbeiten für kundenspezifische Schaltkreise erforderlich sind. Außerdem bietet die Erfindung den Vorteil, daß Daten über zwei voneinander getrennte, doppeltgerichtete Datenübertragungskanäle gesendet oder empfangen werden können, so daß beispielsweise Anordnungen von Datenverarbeitungsanlagen in vermaschten Datenverarbeitungsnetzen realisierbar sind.

Die vorliegende Erfindung wird im folgenden an Hand mehrerer Ausführungsbeispiele für die Erfindung betreffender Figuren erläutert.

Fig. 1 zeigt das Blockschaltbild einer erfindungsgemäßen Datensende/-empfangseinrichtung 10 mit den in ihr angeordneten verschiedenen Einrichtungen und den zum Anschluß an externe Einrichtungen vorgesehenen Anschlußleitungen.

Fig. 2 zeigt ein Ausführungsbeispiel einer in einer Baumstruktur angeordneten Datenverarbeitungsanlage mit mehreren erfindungsgemäßen Datensende/-empfangseinrichtungen 1001 ... 1013, einem Hauptrechner 20, einem ersten und zweiten Vorrechner 51, 52 und einem dritten, vierten, fünften und sechsten Vorrechner 53, 54, 55, 56.

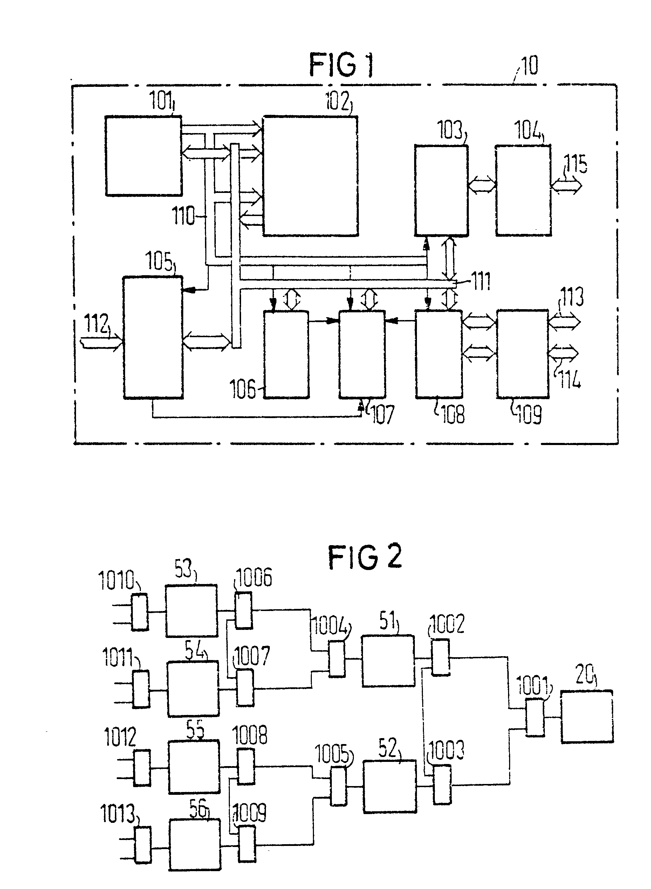

Fig. 1 zeigt, wie bereits erläutert, das Blockschaltbild einer erfindungsgemäßen Datensende/ empfangseinrichtung 10 mit den in ihr angeordneten verschiedenen Einrichtungen und den zum Anschluß an externe Einrichtungen vorgesehenen Anschlußleitungen.

Über eine doppeltgerichtete lokale Datenaustauschleitung 112 und eine Parallelzeichenschnittstelle 105 sind Daten von und zu einer lokalen, also am Ort der Datensende-/empfangseinrichtung befindlichen weiteren Einrichtung, wie z. B. einem Hauptrechner übertragbar. Über die erste Modemanschlußleitung 113 und die zweite Modemanschlußleitung 114 und ein als Eingabe-/Ausgabeeinrichtung dienendes Datenmodem 109 sind Daten von und zu in der gleichen Hierarchiestufe angeordneten weiteren Datensende-/empfangseinrichtungen und/oder von und zu in einer anderen Hierarchiestufe angeordneten Datenverarbeitungseinrichtungen ermöglicht.

Ein zu sendendes Datentelegramm, für das die Daten beispielsweise über die lokale Datenaustauschleitung 112 und die Parallelzeichenschnittstelle 105 empfangen worden sind, kann wahlweise mittels entsprechend eingegebener Schaltbefehle, die ihrerseits Bestandteil der empfangenen Information sein können oder als Bestandteil der Programminformation der betreffenden Datensende-/empfangseinrichtung existieren, von einem Mikroprozessor 101 in Zusammenarbeit mit einem Prozedurspeicher 102 bit-orientiert oder zeichenorientiert sendegerecht umgesetzt werden.

Bei bit-orientierten Datentelegrammen kann das an sich bekannte SDLC (Synchronous Data Link Control)-Verfahren oder das ebenfalls an sich bekannte HDLC (High-Level Data Link Control)-Verfahren durchgeführt werden. Die Datentelegramme, die über die erste bzw. zweite Modemanschlußleitung 113 bzw. 114 gesendet oder empfangen werden, bestehen aus Seriellzeichen.

Die für das bekannte HDLC- bzw. SDLC-Verfahren vorzunehmende Aufbereitung abgehender Datentelegramme bzw. zur Verarbeitung ankommender Datentelegramme erforderlichen Funktionen werden von einem speziell für diese Zwecke entwickelten Baustein Z 80 - SIO, nämlich SDLC/HDLC-Baustein 108, durchgeführt. Dieser Baustein gibt Informationen an das Datenmodem 109 ab oder empfängt Informationen von ihr. Die zu sendenden oder zu empfangenden Daten werden dem SDLC/HDLC-Baustein 108 über einen Datenbus 111 zugeführt oder entnommen.

An diesen Datenbus 111 sind außer dem Mikroprozessor 101 und dem Prozedurspeicher 102 auch noch die Parallelzeichenschnittstelle 105, ein Zeitgeber 106, eine Interruptsteuerung 107 und eine Parallelschnittstelle 103 angeschlossen. Solche Anordnungen sind an sich bekannt, siehe z. B. Mikroprozessor-Bausteine Datenbuch 1976/1977 System SAB 8080, herausgegeben von der SIEMENS AG, Bereich Bauelemente, S. 63−79: »Zusammenschaltung des SAB 8080 mit anderen Mikrocomputer-Bausteinen«. Diese Parallelschnittstelle 103 ist über einen Zeichenkanal mit einem Treiber 104 verbunden, dessen Ausgang über eine Modemsteuerleitung 115 mit einem beispielsweise als automatische Wähleinrichtung für Datenübertragung AWD realisierten Modem verbindbar ist.

Über eine solche automatische Wähleinrichtung für Datenübertragung AWD können Wählverbindungen innerhalb eines privaten Telefonnetzes oder innerhalb des öffentlichen Telefonnetzes zu anderen Datenverarbeitungseinrichtungen, wie z. B. einem Großrechner hergestellt werden.

Zum Aufbau einer solchen Wählverbindung werden vom Mikroprozessor 101 über den Datenbus 111 entsprechende Wählinformationen zur Parallelschnittstelle 103 und damit zum Treiber 104 übertragen. Die zu sendenden oder zu empfangenden Datentelegramme werden über das betreffende Fernsprechnetz im MFC (Multi Frequeny Code)-Verfahren übertragen.

Die einzelnen mit dem Datenbus 111 verbundenen Einrichtungen der erfindungsgemäßen Datensende/-Empfangseinrichtung 10 sind über einen Adreßbus 110 aufrufbar. Die Interruptsteuerung 107 hat die Aufgabe, jeweils laufende Prozeduren durch Prozeduranforderungen höherer Priorität zu unterbrechen. Der Zeitgeber 106 hat die Aufgabe, die zeitlichen Abläufe von laufenden Prozeduren zu überwachen. Außerdem wird es dazu benutzt, die Baud-Raten, d. h. die Zeichensende-Geschwindigkeiten zu steuern.

Die Parallelzeichenschnittstelle 105 ist schnittstellenspezifisch organisiert und mechanisch so aufgebaut, daß eine einfache Austauschbarkeit gegeben ist.

Erfindungsgemäß ist außerdem vorgesehen, daß die Parallelzeichenschnittstelle 105 programmierbar ausgeführt ist, so daß eine Anpassung an eine beliebige ausgelegte lokale Datenaustauschleitung 112 ermöglicht ist.

Der Prozedurspeicher 102, der in der Regel als ROM oder als RAM ausgeführt ist, hat neben der Aufgabe der Speicherung von Prozedurinformationen außerdem die Aufgabe, als Pufferspeicher für zu sendende oder zu empfangende Daten zu fungieren.

Fig. 2 zeigt, wie bereits ebenfalls erläutert, ein Ausführungsbeispiel einer in einer Baumstruktur angeordneten Datenverarbeitungsanlage mit mehreren erfindungsgemäßen Datensende/-empfangseinrichtungen 1001 ... 1013, einem Hauptrechner 20, einem ersten und zweiten Vorrechner 51, 52 und einem dritten, vierten, fünften und sechsten Vorrechner 53, 54, 55, 56. Dieser eine Weiterbildung der Erfindung zeigenden Figur ist zu entnehmen, daß der Hauptrechner 20 über die betreffende lokale Datenaustauschleitung, die ihm zugeordnete Datensende/-empfangseinrichtung 1001 und die betreffende erste bzw. zweite Modemanschlußleitung mit einem Vorrechner 51 und einem zweitem Vorrechner 52 über die diesen Vorrechnern 51, 52 jeweils individuell zugeordnete Datensende/-empfangseinrichtung 1002 bzw. 1003 verbunden ist, wobei jeder Vorrechner 51, 52 an die erste oder zweite Modemanschlußleitung der ihm zugeordneten Datensende/-empfangseinrichtung 1002 bzw. 1003 angeschlossen ist. Diese beiden Datensende/-empfangseinrichtungen 1002, 1003 sind miteinander über die jeweils verbliebene erste bzw. zweite Modemanschlußleitung verbunden. Dem ersten und zweiten Vorrechner 51,52 sind jeweils mittels weiterer Datensende/-empfangseinrichtungen 1004, 1006, 1007 bzw. 1005, 1008, 1009 ein dritter Vorrechner 53 und ein vierter Vorrechner 54 bzw. ein fünfter Vorrechner 55 und ein sechster Vorrechner 56 in der gleichen Weise wie der erste und zweite Vorrechner 51,52 dem Hauptrechner 20 nachgeschaltet. Damit entsteht eine verzweigte, mehrstufige Systemstruktur, die eine flexible und zeitsparende Datenverarbeitung dadurch gestattet, daß Teilprobleme eines gesamten Verarbeitungsvorganges in speziell dafür vorgesehenen und programmierten Vorrechnern durchgeführt werden bzw. zeitsparend zeitlich parallel abzuwickelnde Teilverarbeitungsvorgänge durchführbar sind.

Die in Fig. 2 gezeigte Systemstruktur ist lediglich ein Anwendungsbeispiel für die erfindungsgemäße Datensende/-empfangseinrichtung. Es sind gemäß den genannten Eigenschaften der erfindungsgemäßen Datensende/-empfangseinrichtungen weitere, hier nicht gezeigte Anwendungsbeispiele durchführbar. So können z. B. mehrere Hauptrechner 20 vorgesehen sein, wovon jeweils zwei Hauptrechner 20 über ihnen jeweils individuell zugeordnete Datensende/-empfangseinrichtungen 10 verbunden sind. Eine andere Möglichkeit besteht darin, daß drei Hauptrechner vorgesehen sind, daß jedem der drei Hauptrechner eine individuelle Datensende/-empfangseinrichtung 10 zugeordnet ist und daß jede Datensende/-empfangseinrichtung 10 mit jeder weiteren Datensende/-empfangseinrichtung 10 über ihre erste bzw. zweite Modemanschlußleitung 113 bzw. 114 verbunden ist, so daß jeder Hauptrechner mit jedem weiteren Hauptrechner korrespondieren kann.

Die durch die Erfindung erzielbare Entlastung der jeweils betreffenden internen Datenverarbeitungseinrichtung erlaubt den vorteilhaften Einsatz der erfindungsgemäßen Anordnung insbesondere in Datenverarbeitungsanlagen, die im Echtzeitbetrieb arbeiten. Dazu zählen unter anderem Prozeßsteuerwerke und programmgesteuerte Fernsprech- oder Datenvermittlungssysteme.

**Patentanspruch**

Datenverarbeitungsanlage, bei der mehrere Vorrechner und ein den Vorrechnern übergeordneter Hauptrechner in einer Baumstruktur angeordnet sind, dadurch gekennzeichnet, daß jedem Rechner mindestens eine Datensende/-empfangseinrichtung mit Parallel/Seriell- und Seriell/-Parallel-Zeichenumsetzung zum Datenaustausch zwischen kommunizierenden Datenverarbeitungsanlagen zugeordnet ist, die zur Steuerung von Datensende- und/oder -empfangsprozeduren zwischen einer lokalen Datenverarbeitungsanlage und einem eine Datenübertragungsleitung abschließenden Datenmodem (109) dient und folgende Baugruppen aufweist: einen Mikroprozessor (101), einen Prozedurspeicher (102), einen Speicher mit wahlfreiem Zugriff als Datenpuffer, mittels dessen bei Datensende- und/oder -empfangs-Vorgängen auftretende Datenstaus auffangbar sind, eine Interruptsteuerung (107), mittels derer im Mikroprozessor (101) laufende Verarbeitungsvorgänge für Vorgänge höherer Verarbeitungspriorität unterbrechbar sind, einen Zeitgeber (106), mittels dessen eine jeweils optimale Sendegeschwindigkeit einstellbar ist, wobei das Datenmodem (109) eine erste Modemanschlußleitung (113) und eine zweite Modemanschlußleitung (114) aufweist, wobei dem Datenmodem (109) eine an sich bekannter SDLC/HDLC-Baustein (108) zum wahlweisen Aussenden oder Empfangen bitorientierter Datentelegramme nach dem SDLC- oder HDLC-Verfahren vorgeschaltet ist, daß jeder Rechner mit der Datensende-/empfangseinrichtung über eine lokale Datenaustauschleitung (112) und eine programmierbare Parallelzeichenschnittstelle (105) verbunden ist, so daß eine Anpassung an eine beliebig ausgelegte lokale Datenaustauschleitung (112) ermöglicht ist, daß der Hauptrechner (20, Fig. 4) über die lokale Datenaustauschleitung (112), die ihm zugeordnete Datensende/-empfangseinrichtung (1001) und die betreffende erste bzw. zweite Modemanschlußleitung (113 bzw. 114) mit einem ersten Vorrechner (51) und einem zweitem Vorrechner (52) über die diesen Vorrechnern (51, 52) jeweils individuell zugeordnete Datensende/-empfangseinrichtung (1002 bzw. 1003) verbunden ist, wobei jeder Vorrechner (51, 52) an die erste oder zweite Modemanschlußleitung (113 oder 114) der ihm zugeordneten Datensende/-empfangseinrichtung (1002 bzw. 1003) angeschlossen ist und diese beiden Datensende/-empfangseinrichtungen (1002, 1003) miteinander über die jeweils verbliebene erste bzw. zweite Modemanschlußleitung (113 bzw. 114) verbunden sind, und daß dem ersten und zweiten Vorrechner (51, 52) jeweils mittels weiterer Datensende/-empfangseinrichtungen (1004, 1006, 1007, bzw. 1005, 1008, 1009) weitere Vorrechner (53, 54, 55, 56) in der gleichen Weise wie der erste und zweite Vorrechner (51, 52) dem Hauptrechner (20) nachgeschaltet sind, so daß eine verzweigte, mehrstufige Systemstruktur gegeben ist.

**Claim**

A data processing system wherein a plurality of front-end computers and a main computer which is superordinate to the front-end computers are arranged in a tree structure, characterized in that each computer is assigned at least one data transmitting/receiving arrangement with parallel/series and series/parallel character conversion for data exchange between communicating data processing systems, which arrangement serves to control data transmitting and/or receiving procedures between a local data processing system and a data modem (109) which terminates a data transmission line, and includes the following assemblies: a microprocessor (101), a procedure store (102), a random access store as data buffer by means of which data jams occurring during data transmitting and/or receiving procedures can be forestalled, an interrupt control unit (107) by means of which processing procedures running in the microprocessor (101) can be interrupted for procedures having a higher processing priority, a timer (106) by means of which an optimum transmission speed can in each case be set, where the data modem (109) has a first modem terminal line (113) and a second modem terminal line (114), where the data modem (109) is preceded by an SDLC/HDLC module (108) which is known per se and which serves optionally to transmit or receive bit-oriented data telegrams in accordance with the SDLC- or HDLC-process, that each computer is connected to the data transmitting/receiving arrangement via a local data exchange line (112) and a programmable parallel character interface (105) so as to facilitate matching to a local data exchange line (112) or arbitrary design, that the main computer (20, fig. 4) is connected via the local data exchange line (112), via its assigned data transmitting/receiving arrangement (1001), and via the relevant first and second modem terminal line (113, 114), to a first front-end computer (51) and a second front-end computer (52) by way of the data transmitting/receiving arrangement (1002, 1003) individually assigned to these front-end computers (51, 52), where each front-end computer (51, 52) is connected to the first or second modem terminal line (113 or 114) of its assigned data transmitting/receiving arrangement (1002, 1003), and these two data transmitting/receiving arrangements (1002, 1003) are connected to one another via the relevant remaining first or second modem terminal line (113, 114), and that the first and second front-end computers (51, 52) are respectively followed through further data transmitting/receiving arrangements (1004, 1006, 1007 and 1005, 1008, 1009) by further front-end computers (53, 54, 55, 56) in the same way as the first and second front-end computers (51, 52) follow the main computer (20), so as to form a branched, multi-stage system structure.

**Revendication**

Installation de traitement de données, dans laquelle plusieurs préprocesseurs et un calculateur principal d'ordre supérieur aux préprocesseurs sont disposés selon une structure ramifiée, caractérisée par le fait qu'à chaque calculateur est associé au moins un dispositif d'émission/de réception de données effectuant une conversion parallèle/série et une conversion série/parallèle de caractères pour l'échange de données entre des installations communiquantes de traitement de données, que ce dispositif sert à la commande des procédures d'émission et/ou de réception de données entre une installation locale de traitement de données et un modem de transmission de données (109) terminant une ligne de transmission de données et possède les modules suivants: un microprocesseur (101), une mémoire de procédure (102), une mémoire à accès direct servant de mémoire tampon et au moyen de laquelle des accumulations de données apparaissantes peuvent être captées lors de processus d'émission et/ou de réception de données, un dispositif de commande d'interruptions (107) au moyen duquel des processus de traitement en cours dans le microprocesseur (101) peuvent être interrompus pour la mise en oeuvre de processus présentant une priorité de traitement supérieure, et une horloge (106) au moyen de laquelle il est possible de régler une vitesse optimale d'émission, tandis que le modem de transmission de données (109) possède une première ligne (113) de liaison de modem et une seconde ligne (114) de liaison de modem et qu'en amont du modem de transmission de données (109) est branché un module SDLC/HDLC (108) connu en soi servant à émettre ou à recevoir à volonté des télégrammes de données opérant au niveau du bit, selon le procédé SDLC ou HDLC, que chaque calculateur est relié au dispositif d'émission/de traitement de données par l'intermédiaire d'une ligne locale (112) d'échange de données et d'un interface programmable (105) de transmission de caractères en parallèle de telle sorte qu'une adaptation à une ligne locale (112) d'échange de données, agencée d'une manière quelconque, est possible, que le calculateur principal (20, fig. 4) est relié au moyen de la ligne locale (112) d'échange de données, du dispositif (1001) d'émission/de réception de données, qui lui est associé, et de la première ou de la seconde ligne (113 ou 114) de liaison de modem, à un premier préprocesseur (51) et à un second préprocesseur (52) par l'intermédiaire du dispositif d'émission/de réception de données (1002 ou 1003) associé individuellement à ces préprocesseurs (51, 52), auquel cas chaque préprocesseur (51, 52) est relié à la première ou à la seconde ligne (113 ou 114) de liaison de modem du dispositif (1001 ou 1003) d'émission/de réception de données, qui lui est associé, et ces deux dispositif (1002, 1003) d'émission/de réception de données sont reliés entre deux par l'intermédiaire de la première ou de la seconde ligne (113 ou 114) de liaison de modem, qui subsiste, et que d'autres préprocesseurs (53, 54, 55, 56) sont branchés en aval des premier et second préprocesseurs (51, 52), respectivement au moyen d'autres dispositifs (1004, 1006, 1007 ou 1006, 1008, 1009) d'émission/de réception de données, de la même manière que les premier et second préprocesseurs (51, 52) sont branchés en aval du calculateur principal (20), de telle sorte que l'on obtient une structure de système ramifiée à plusieurs échelons.

# FIG 1

# FIG 2